# EUROPÄISCHE PATENTSCHRIFT

(11) **EP 3 532 738 B1**
(45) Veröffentlichungstag und Bekanntmachung des Hinweises auf die Patenterteilung: **23.09.2020**
(21) Anmeldenummer: 17745732.2
(22) Anmeldetag: 31.07.2017
(51) Int. Cl.: F16B 21/07

(54) **RINGFÖRMIGE STECKKUPPLUNG UND VERFAHREN ZUR HERSTELLUNG EINER VERBINDUNG ZWISCHEN BAUTEILEN MITHILFE DER RINGFÖRMIGEN STECKKUPPLUNG**
ANNULAR PLUG-IN COUPLING AND METHOD FOR PRODUCING A CONNECTION BETWEEN COMPONENTS WITH THE AID OF THE ANNULAR PLUG-IN COUPLING
RACCORD ENFICHABLE ANNULAIRE ET PROCÉDÉ DE FABRICATION D'UN RACCORD ENTRE DES COMPOSANTS À L'AIDE DU RACCORD ENFICHABLE ANNULAIRE

(30) Priorität: 28.10.2016 DE 102016120650
(43) Veröffentlichungstag der Anmeldung: 04.09.2019
(73) Patentinhaber: Böllhoff Verbindungstechnik GmbH, 33649 Bielefeld (DE)
(72) Erfinder: ARNDT, Andreas, 32689 Kalletal (DE); KÖNIG, Michael, 33729 Bielefeld (DE)
(74) Vertreter: HWP Intellectual Property
(86) Internationale Anmeldenummer: PCT/EP2017/069326
(87) Internationale Veröffentlichungsnummer: WO 2018/077500

(56) Entgegenhaltungen:
- WO-A1-2016/128271
- DE-U1-202013 011 533

## Beschreibung

### 1. Gebiet der Erfindung

Die vorliegende Erfindung betrifft eine ringförmige Steckkupplung, die in einer Bauteilöffnung eines ersten Bauteils befestigbar ist. Des Weiteren betrifft vorliegende Erfindung eine Verbindung zwischen zwei Bauteilen mithilfe dieser ringförmigen Steckkupplung, insbesondere eine Verbindung zwischen einem fahrzeugfesten Bauteil, wie beispielsweise der Karosserie oder dem Fahrzeugrahmen, und einem Anbauteil, wie beispielsweise ein Scheinwerfer. Vorliegende Erfindung umfasst des Weiteren ein Verbindungsverfahren zum Herstellen einer Verbindung zwischen einem ersten und einem zweiten Bauteil mithilfe der ringförmigen Steckkupplung.

### 2. Hintergrund der Erfindung

Steckkupplungen werden verwendet, um beispielsweise im Automobilbau Anbauteile, wie Leuchten, Verkleidungen und dergleichen, an festen Bestandteilen des Kraftfahrzeugs zu befestigen. Zu diesen festen Bestandteilen des Kraftfahrzeugs zählen die Fahrzeugkarosserie, der Fahrzeugrahmen sowie weitere starr angeordnete Teile im Fahrzeug.

Ein wichtiges Ziel der hier herzustellenden Verbindung besteht darin, zu ihrer Herstellung wenig Zeit und Aufwand zu benötigen. Deshalb werden beispielsweise häufig Steckkupplungen eingesetzt, die aus einer flexiblen Kugelpfanne und einem Kugelkopf bestehen, die an einander gegenüberliegenden Bauteilen befestigt sind. Sobald der Kugelkopf in die Kugelpfanne einschnappt, ist die Verbindung zwischen den beiden Bauteilen hergestellt.

Es hat sich gezeigt, dass bei der Verbindung von zwei Bauteilen häufig Toleranzen ausgeglichen werden müssen. Diese Toleranzen entstehen durch Geometriegestaltungen der miteinander zu verbindenden Teile, durch eine toleranzbehaftete Anordnung von Bauteilöffnungen, in denen die Steckkupplung der späteren Verbindung anzuordnen ist, oder durch fehlerhaft ausgerichtete Steckkupplungen und damit zu verbindende Kupplungsbolzen. Sofern diese Toleranzen nicht ausgeglichen werden, können sie mechanische Spannungen in der hergestellten Verbindung aus Kupplungsbolzen und Steckkupplung erzeugen, die nachteilig ein Lösen der Verbindung unterstützen.

Um eine toleranzausgleichende Verbindung herstellen zu können, offenbaren beispielsweise DE 43 34 926 A1, US 7,927,050 B2 und EP 2 757 272 A1 einen flexibel in einer Ringstruktur angeordneten Kupplungsbolzen. Während diese Ringstruktur eine Befestigungsmöglichkeit dieser Kupplung in einer Bauteilöffnung bereitstellt, dient der flexibel innerhalb der Ringstruktur angeordnete Bolzen der Herstellung einer Schnappverbindung mit einer daran angepassten Kupplung. Um die Flexibilität des Bolzens in radialer Richtung bereitzustellen, ist der Bolzen innerhalb der Ringstruktur mit Federarmen befestigt. Dies ermöglicht, dass der Bolzen innerhalb der Ringstruktur bzw. innerhalb der Ebene der Ringstruktur radial ausweichen und somit Toleranzen ausgleichen kann.

Sollten zwei Bauteile ausschließlich mit diesen flexiblen Kupplungskonstruktionen verbunden sein, führt dies zu einer nicht starren, sondern beweglichen Verbindung. Eine derartige Verbindung stellt nicht ein ästhetisch gewünschtes Spaltmaß beispielsweise eines Scheinwerfers in einer Karosserieöffnung sicher. Des Weiteren ist eine derartige Verbindung anfällig für Schwingungen, die sowohl die Verbindung als auch die miteinander verbundenen Teile belastet.

Eine weitere Steckkupplung aus dem Stand der Technik offenbart DE 20 2013 011 533 U1. Die hier beschriebene ringförmige Steckkupplung weist unterschiedlich konfigurierte Federarme zum Halten einer zentral angeordneten Kugelpfanne und zum Verrasten in einer angepassten Bauteilöffnung auf. Da diese bahnförmig ausgebildeten Federarme im Hinblick auf die Längsachse der hier beschriebenen Steckkupplung unterschiedlich orientiert sind, stellen sie eine festere Verbindung zu einem Kupplungsbolzen bereit. Zwar gewährleistet diese Steckkupplung einen radialen Toleranzausgleich, ist aber in ihrer Konfiguration weniger flexibel als die oben beschriebenen Steckkupplungen. Dies liegt daran, dass hier zwei unterschiedlich orientierte Federarmkonfigurationen genutzt werden, während sich der oben beschriebene Stand der Technik auf nur eine Art von zentral angeordneten Federarmen beschränkt.

Im Hinblick auf die bekannten Steckkupplungen stellt die hergestellte Verbindung somit immer noch einen Kompromiss zwischen Toleranzausgleich und gewünschter Verbindungsstabilität und -festigkeit dar. Um diesen Kompromiss zu verbessern, ist im Folgenden eine ringförmige Steckkupplung beschrieben, die mithilfe eines Kupplungsbolzens eine Verbindung zwischen zwei Bauteilen herstellt. Es besteht die Möglichkeit, mit dieser Steckkupplung sowohl eine toleranzreduzierte, vorzugsweise feste Verbindung zwischen zwei Bauteilen herzustellen, wie auch eine toleranzausgleichende Verbindung.

### 3. Zusammenfassung der Erfindung

Die obige Aufgabe wird durch eine ringförmige Steckkupplung gemäß dem unabhängigen Patentanspruch 1, einer Verbindung zwischen einem ersten Bauteil und einem zweiten Bauteil mithilfe der oben genannten Steckkupplung gemäß dem unabhängigen Patentanspruch 7 und dem unabhängigen Patentanspruch 11 sowie durch ein Verbindungsverfahren für ein erstes und ein zweites Bauteil mithilfe der oben genannten Steckkupplung und einem entsprechenden Kupplungsbolzen gemäß dem unabhängigen Patentanspruch 13 gelöst. Vorteilhafte Ausgestaltungen und Weiterentwicklungen vorliegender Erfindung gehen aus der weiteren Beschreibung, den begleitenden Zeichnungen und den anhängenden Ansprüchen hervor.

Die erfindungsgemäße ringförmige Steckkupplung wird in einer Bauteilöffnung eines ersten Bauteils befestigt. Diese ringförmige Steckkupplung weist die folgenden Merkmale auf: eine hohlzylindrische Ringstruktur mit einer Längsachse sowie einer radialen Innen- und einer radialen Außenseite, eine Befestigungsstruktur angeordnet an der radialen Außenseite, mit der die Ringstruktur in der Bauteilöffnung befestigbar ist, eine zentral im Inneren der Ringstruktur angeordnete Verraststruktur, mit der ein Kupplungsbolzen eines zweiten Bauteils lösbar mit der Steckkupplung verbindbar ist und die aus mindestens drei bandartigen Federarmen besteht, die sich von der radialen Innenseite der Ringstruktur krummlinig radial einwärts erstrecken und jeweils in einem freien Befestigungsende enden, deren Federarmbreite in Längsrichtung der Ringstruktur angeordnet und größer als eine Federarmdicke ist, wobei die Befestigungsenden zumindest eine Einführschräge und einen Klemmbereich aufweisen.

Erfindungsgemäß umfasst die Ringstruktur einen ersten und einen zweiten gegeneinander in Längsrichtung der Ringstruktur wirkenden Hinterschnitt, von denen zumindest der erste Hinterschnitt in radialer Richtung federnd bewegbar ist, um die Ringstruktur in der Bauteilöffnung zu verrasten. Die Außenseite der Ringstruktur kann als Klebefläche ausgebildet sein, um in die Bauteilöffnung eingeklebt zu werden. Die Ringstruktur der Steckkupplung ist in bekannter Weise an eine Öffnung in einem Bauteil angepasst. Hier wird die Steckkupplung ohne großen Aufwand eingesteckt und verrastet. Dabei wird die Ringstruktur zwischen den an der radialen Außenseite der Ringstruktur bereitgestellten Hinterschnitten am Bauteil gehalten. Dies ist ebenfalls in Kombination mit der Klebeverbindung nutzbar. Im Zentrum der ringförmigen Steckkupplung befinden sich radial einwärts ragende und krummlinig geformte Federarme. Im Gegensatz zu bekannten Steckkupplungen sind die Enden dieser Federanne gerade nicht miteinander verbunden. Stattdessen bilden die Enden der Federarme Angriffspunkte an dem in der Steckkupplung aufzunehmenden Kupplungsbolzen. Durch den fehlenden Verbund der Enden der Federarme ermöglichen sie ein Ausweichen für einen Toleranzausgleich in radialer Richtung. Entsprechend können die Federarme mit ihren Befestigungsenden in gewissen Grenzen ausweichen, sodass der Kupplungsbolzen seine gewünschte Position unter Ausgleich vorhandener Toleranzen innerhalb der ringförmigen Steckkupplung einnehmen kann. Dabei steht ein Klemmbereich mit dem eingesetzten Kupplungsbolzen in Verbindung, um zumindest eine kraftschlüssige Verbindung zwischen der ringförmigen Steckkupplung und dem Kupplungsbolzen zu bilden. Da der Kupplungsbolzen zumeist aus einem Schaft und einem bauchigen Kopf besteht, wird diese kraftschlüssige Verbindung auch noch durch eine formschlüssige Verbindung zwischen den Befestigungsenden und dem Kupplungsbolzen ergänzt. In Abhängigkeit von den durch die Befestigungsenden der Federarme aufzunehmenden Verbindungslasten ist die Anzahl der Federarme innerhalb der Ringstruktur variabel. Es sollten jedoch mindestens drei Federarme vorgesehen sein, um eine bevorzugt mittige Anordnung des Kupplungsbolzens durch den umfänglichen Angriff der Befestigungsenden zu unterstützen. Zudem ist hervorzuheben, dass die im Inneren der Ringstruktur angeordneten Federarme bandartig ausgestaltet sind. Bandartig bedeutet, dass die Federarme eine Breite aufweisen, die größer ist als die Dicke des Federarms. Diese Bandbreite verläuft bevorzugt in axialer Richtung der ringförmigen Steckkupplung und gewährleistet auf diese Weise eine axiale Stabilität der Verbindung zwischen Steckkupplung und Kupplungsbolzen. Denn gerade die Anordnung der größeren Federarmbreite im Vergleich zur Federarmdicke in Längsrichtung der Stecckupplung reduziert eine Auslenkung der Federarme in axialer Richtung der Steckkupplung. Nichtsdestotrotz ist ein axialer Toleranzausgleich zwischen ringförmiger Steckkupplung und Kupplungsbolzen dadurch möglich, dass der Kupplungsbolzen über eine Länge seines Schaftbereichs zwischen den klemmenden Befestigungsenden der Federarme seine axiale Position verändern kann.

Gemäß einer bevorzugten Ausführungsform der ringförmigen Steckkupplung ist die Federarmbreite in Bezug auf die Längsrichtung der Steckkupplung geneigt oder parallel oder zumindest in Teilbereichen geneigt und/oder parallel dazu angeordnet.

Gemäß einer weiteren bevorzugten Ausführungsform weist die zylindrische Ringstruktur eine axiale Eintrittsseite und eine axiale Austrittsseite für den zu befestigenden Kupplungsbolzen auf. Zudem sind die Federarme in Längsrichtung der Ringstruktur beabstandet zur Eintrittsseite der Ringstruktur an der radialen Innenseite der Ringstruktur befestigt, sodass eine zylindrische Aufnahme für eine Radialfixierung des Kupplungsbolzens in der Ringstruktur vorliegt.

Aufgrund der oben beschriebenen Konfiguration der ringförmigen Steckkupplung dient diese zur Bereitstellung eines Festlagers in gleicher Weise wie zur Herstellung eines Loslagers. Loslager bedeutet in diesem Zusammenhang, dass die zwischen der ringförmigen Steckkupplung und dem Kupplungsbolzen hergestellte Verbindung eine radiale Toleranzausgleichsfunktion enthält. Sind beispielsweise die ringförmige Steckkupplung und der Kupplungsbolzen nicht optimal zentrisch zueinander ausgerichtet, dann ist dennoch eine Verbindung zwischen Kupplungsbolzen und ringförmiger Steckkupplung möglich. In dieser Verbindung nimmt dann der Kupplungsbolzen eine nicht mittige Anordnung innerhalb der Ringstruktur ein. Innerhalb dieser Anordnung wird trotzdem der Kupplungsbolzen verlässlich durch die an seinem Schaft angreifenden Befestigungsenden der Federarme gehalten. Ein Festlager bedeutet, dass die Verbindung zwischen ringförmiger Steckkupplung und Kupplungsbolzen keinen oder nur einen stark reduzierten Ausgleich von radialen Toleranzen zulässt. Vorzugsweise wird ein derartiger Toleranzausgleich ausgeschlossen, um die Verbindung an einem fest definierten Ort bzw. einer fest definierten Position herzustellen. Zu diesem Zweck weist die ringförmige Steckkupplung an der Eintrittsseite eine zylindrische Aussparung auf. Diese Aussparung ist an eine komplementär dazu ausgebildete zylindrische Verdickung am Kupplungsbolzen angepasst. Daraus folgt, dass auch andere komplementäre Formgestaltungen von ringförmiger Steckkupplung und Kupplungsbolzen gewählt werden können, wie beispielsweise eine Kegelform, eine Halbkugel oder dergleichen, die in die jeweilige Komplementärform eingreifen. Nachdem die zylindrische Verdickung des Kupplungsbolzens in den zylindrischen Aufnahmebereich der ringförmigen Steckkupplung aufgenommen worden ist, verhindert die genaue Passung dieser beiden Formgestaltungen den Ausgleich radialer Toleranzen. Denn vorzugsweise wird die zylindrische Verdickung des Kupplungsbolzens spaltlos innerhalb der zylindrischen Aufnahme der ringförmigen Steckkupplung gehalten. Entsprechend werden die beiden miteinander verbundenen Bauteile radial fixiert, da keine Radialtoleranzen ausgleichbar sind. Somit stellt die Verbindung aus Kupplungsbolzen und Steckkupplung eine Radialfixierung bereit.

Gemäß einer bevorzugten Ausführungsform vorliegender Erfindung schließen die Einführschrägen der Befestigungsenden mit der Längsachse der Steckkupplung einen Winkel von <45° ein. Die Auszugsschrägen der Befestigungsenden schließen mit der Längsachse der Steckkupplung einen größeren Winkel als der zwischen Längsachse und Einführschräge ein. Diese beliebig einstellbare winklige Ausrichtung von Einfuhrschräge und Auszugsschräge wirkt sich auf den Installations- und Deinstallationsaufwand für die herzustellende Verbindung aus. Zudem wird die winklige Einstellung der Einführschräge und der Auszugschräge in enger Abstimmung mit dem Federverhalten der Federarme gewählt. In diesem Zusammenhang ist es bevorzugt, die ringförmige Steckkupplung als integrales Kunststoffteil auszubilden, dessen Kunststoff eine Festigkeit im Bereich von 20-100 MPa aufweist. In gleicher Weise ist es bevorzugt, die Federarme der ringförmigen Steckkupplung durch Metalleinsätze zu verstärken oder in ihrer Flexibilität zu unterstützen. Das gleiche gilt natürlich für die zentrale Ringstruktur der Steckkupplung.

Weiterhin bevorzugt weisen die Befestigungsenden der Federanne eine Haltefläche im Klemmbereich auf, die parallel zur Längsachse der Steckkupplung angeordnet ist.

Vorliegende Erfindung umfasst zudem eine Verbindung zwischen einem ersten Bauteil und einem zweiten Bauteil, in der das erste Bauteil eine Bauteilöffnung aufweist, in der eine Steckkupplung gemäß einer der oben beschriebenen Ausgestaltungen befestigt ist, und in der am zweiten Bauteil ein Kupplungsbolzen befestigt ist, der in der Steckkupplung des ersten Bauteils gehalten ist.

Wie oben bereits erläutert wurde, weist der Kupplungsbolzen bevorzugt einen länglichen Schaft und einen bauchigen Kopf auf. Zudem ist gemäß einer bevorzugten Ausgestaltung der Kupplungsbolzen in einem kopfabgewandten Schaftbereich mit einer zylindrischen Verdickung ausgestattet, die an die zylindrische Aufnahme der ringförmigen Steckkupplung angepasst und in diese aufnehmbar ist. In diesem Zusammenhang ist es ebenfalls bevorzugt, die zylindrische Verdickung integral mit dem Kupplungsbolzen auszubilden. Gemäß einer anderen bevorzugten Ausführungsform vorliegender Erfindung ist die zylindrische Verdickung als eine auf dem Kupplungsbolzen befestigbare Hülse realisiert. Nutzt man den bevorzugten integral ausgebildeten Kupplungsbolzen mit zylindrischer Verdickung, dann ist mit diesem Kupplungsbolzen ausschließlich ein Festlager in Kombination mit der ringförmigen Steckkupplung herstellbar. Nutzt man einen Kupplungsbolzen, der keine integrale zylindrische Verdickung aufweist, dann ist dieser Kupplungsbolzen zunächst zur Herstellung eines Loslagers in Kombination mit der ringförmigen Steckkupplung geeignet. Stattet man diesen Kupplungsbolzen entsprechend der Anwendungssituation mit einer zylindrischen Hülse an seinem Schaft aus, dann ist genau dieser Kupplungsbolzen ebenfalls zur Herstellung eines Festlagers in Kombination mit der ringförmigen Steckkupplung einsetzbar. Daraus folgt, dass die hier bevorzugte Konstruktion des Kupplungsbolzens als integrales Bauteil oder als Bauteil mit zylindrischer Hülse flexibel einsetzbar ist, um sowohl ein Festlager als auch ein Loslager in einer herzustellenden Verbindung zu realisieren.

Vorliegende Erfindung offenbart zudem eine Verbindung zwischen einem ersten und einem zweiten Bauteil, insbesondere eine Fahrzeugkarosserie und ein Anbauteil eines Fahrzeugs, in der das erste Bauteil mindestens zwei jeweils in einer Bauteilöffnung angeordnete Steckkupplungen gemäß einer der oben beschrieben Ausführungsformen und das zweite Bauteil zwei dazu passend angeordnete Kupplungsbolzen aufweist. In dieser Verbindung umfasst einer der Kupplungsbolzen eine zylindrische Verdickung im kopfabgewandten Schaftbereich, die in einer zylindrischen Aufnahme der Steckkupplung aufgenommen ist, um eine radial feste Verbindung zwischen dem ersten und dem zweiten Bauteil zu bilden. Weiterhin bevorzugt umfasst der zweite Kupplungsbolzen keine zylindrische Verdickung, sodass dieser mit der zugeordneten ringförmigen Steckkupplung einen radialen Toleranzausgleich zwischen der zweiten ringförmigen Steckkupplung und dem zweiten Kupplungsbolzen gewährleistet.

Vorliegende Erfindung offenbart zudem ein Verbindungsverfahren für ein erstes und ein zweites Bauteil, das die folgenden Schritte aufweist: Anordnen zumindest einer ersten und einer zweiten Steckkupplung gemäß einer der oben beschriebenen Ausführungsformen in jeweils einer Bauteilöffnung des ersten Bauteils, Befestigen eines ersten und eines zweiten Kupplungsbolzens im zweiten Bauteil in einer Anordnung angepasst an die Anordnung der ersten und zweiten Steckkupplung im ersten Bauteil, wobei einer der Kupplungsbolzen eine zylindrische Verdickung als Radialfixierung in Kombination mit der Steckkupplung aufweist, und der andere Kupplungsbolzen ohne zylindrische Verdickung bereitgestellt wird, und Einstecken und Verriegeln der Kupplungsbolzen in der ersten und zweiten Steckkupplung des ersten Bauteils.

In weiterer bevorzugter Ausgestaltung des oben beschriebenen Verbindungsverfahrens wird ein Kupplungsbolzen mit zylindrischer Verdickung als ein integraler Kupplungsbolzen oder als ein Kupplungsbolzen mit einer Hülse bereitgestellt. Zudem ist es bevorzugt, den Kupplungsbolzen mit zylindrischer Verdickung derart in die Ringstruktur einzustecken, dass die zylindrische Verdickung in der zylindrischen Aufnahme angrenzend an die Eintrittsseite der Ringstruktur angeordnet ist, so dass die zylindrische Aufnahme einen radialen Versatz der aufgenommenen zylindrischen Verdickung verhindert. Diese Anordnung stellt sicher, dass ein Festlager zwischen der ringförmigen Steckkupplung und dem Kupplungsbolzen mit zylindrischer Verdickung vorliegt. Entsprechend können das erste und das zweite Bauteil relativ zueinander keine radialen Ausgleichsbewegungen mehr ausführen, sobald der Kupplungsbolzen in der genannten ringförmigen Steckkupplung fixiert ist. Nichtsdestotrotz ist zumindest eines der Bauteile um das hergestellte Festlager drehbar, um eine passende Orientierung zwischen der weiteren ringförmigen Steckkupplung und dem daran angepassten Kupplungsbolzen einzustellen. Sobald diese gewünschte Orientierung erzielt ist, wird der Kupplungsbolzen ohne zylindrische Verdickung in die ringförmige Steckkupplung eingesteckt und dort verrastet. Mithilfe dieses Vorgehens ist es möglich, ein Anbauteil an einer festen Struktur verlässlich zu fixieren und dabei gleichzeitig mit einem gewissen Toleranzausgleich ein gewünschtes Spaltmaß, beispielsweise bei Anbauteilen im Kraftfahrzeug, umzusetzen.

### 4. Detaillierte Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine perspektivische Ansicht einer bevorzugten Ausführungsform der erfindungsgemäßen ringförmigen Steckkupplung mit einer Eintrittsseite für einen Kupplungsbolzen im Vordergrund,
- Figur 2: eine perspektivische Ansicht einer bevorzugten Ausführungsform der erfindungsgemäßen ringförmigen Steckkupplung mit einer Austrittsseite für einen Kupplungsbolzen im Vordergrund,
- Figur 3: eine bevorzugte Ausführungsform des Einsetzens des Kupplungsbolzens an der Eintrittsseite in die bevorzugte ringförmige Steckkupplung,
- Figur 4: eine bevorzugte Ausführungsform des Kupplungsbolzens eingesetzt in die ringförmige Steckkupplung der Fig. 3 mit verriegeltem Kopf des Kupplungsbolzens,
- Figur 5: eine bevorzugte Ausführungsform einer Anordnung des Kugelbolzens an der Eintrittsseite nach dem Verriegeln in der ringförmigen Steckkupplung,
- Figur 6: eine Schnittdarstellung der Verbindung gemäß Fig. 5,

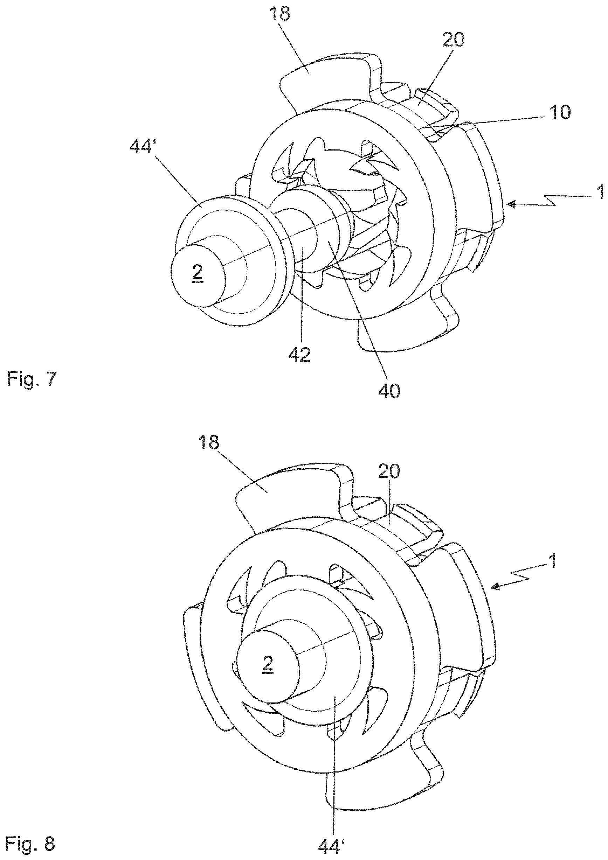

- Figur 7: eine weitere bevorzugte Ausführungsform einer Anordnung eines Kupplungsbolzens mit zylindrischer Verdickung beim Einsetzen des Kupplungsbolzens an der Eintrittsseite in die bevorzugte ringförmige Steckkupplung,
- Figur 8: die Anordnung der Fig. 7 nach dem Verriegeln des Kupplungsbolzens in der Steckkupplung,
- Figur 9: eine Schnittdarstellung der Verbindung gemäß Fig. 8, in der der bevorzugte Kupplungsbolzen eine integrale zylindrische Verdickung aufweist,
- Figur 10: eine Schnittdarstellung der Verbindung gemäß Fig. 8, in der der bevorzugte Kupplungsbolzen eine Hülse als zylindrische Verdickung aufweist,
- Figur 11: eine bevorzugte Ausführungsform einer Verbindung von zwei Bauteilen mit einer Mehrzahl von Steckkupplungen und Kupplungsbolzen,
- Figur 12: ein Flussdiagramm einer bevorzugten Ausführungsform des erfindungsgemäßen Verbindungsverfahrens.

### 5. Detaillierte Beschreibung der bevorzugten Ausführungsformen

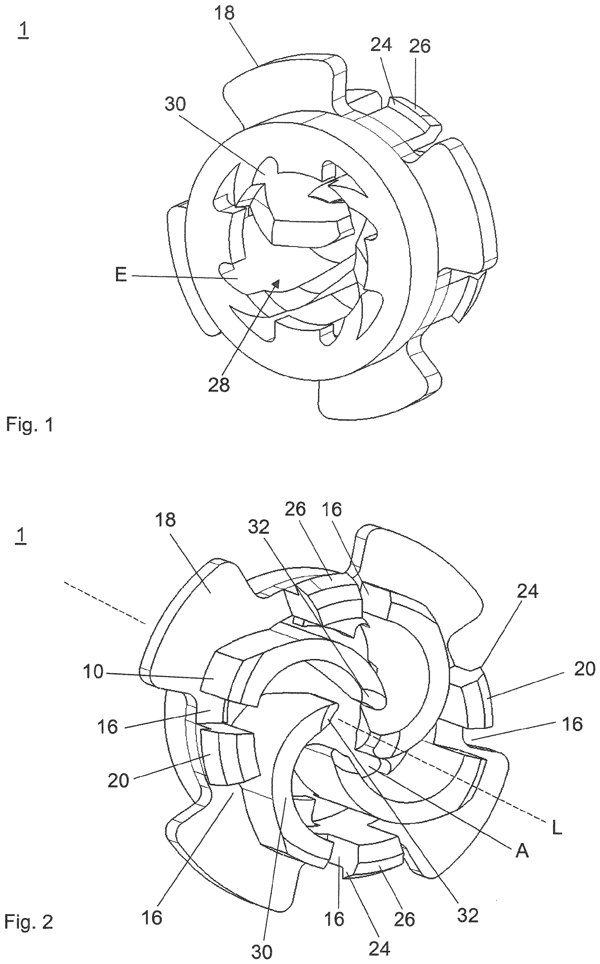

Eine bevorzugte Ausführungsform der ringförmigen Steckkupplung 1 ist jeweils in einer perspektivischen Ansicht in Fig. 1 und 2 dargestellt. Um eine Verbindung zwischen einem ersten B1 und einem zweiten Bauteil B2 herzustellen, wird die ringförmige Steckkupplung 1 in einer Bauteilöffnung O des ersten Bauteils B1 verrastet bzw. allgemein befestigt. In dem zweiten Bauteil B2 ist ein Kupplungsbolzen 2 befestigt. Dieser Kupplungsbolzen 2 ist in eine Bauteilöffnung eingeschraubt, eingeklebt, darin vernietet oder dergleichen.

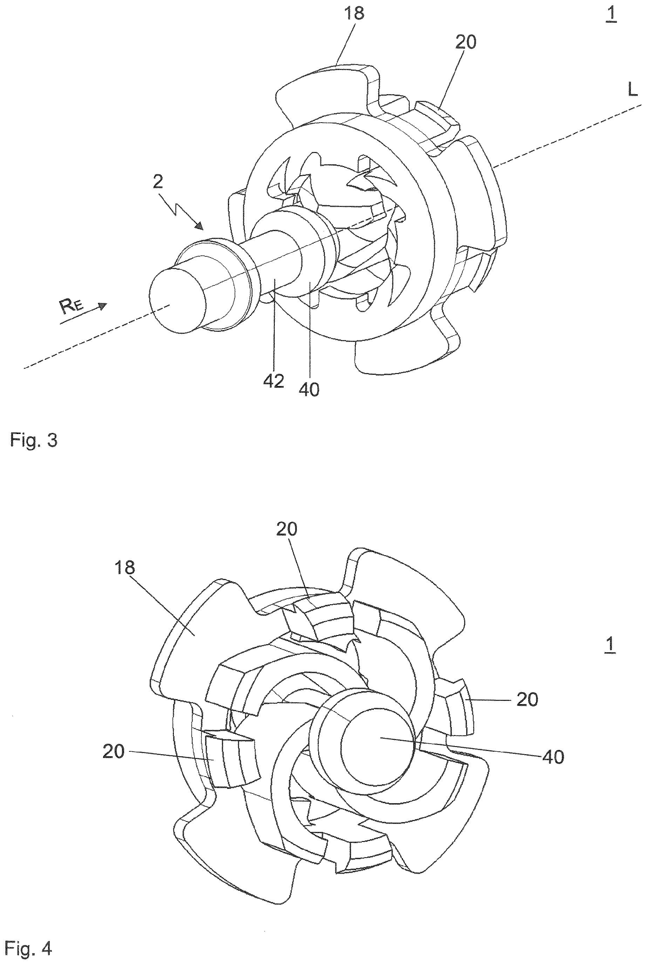

Der Kupplungsbolzen 2 wird von einer Eintrittsseite E in die ringförmige Steckkupplung 1 eingesteckt, bis der Kupplungsbolzen 2 darin einrastet. Dies ist in Fig. 4 gezeigt, wo ein bauchiger Kopf 40 des Kupplungsbolzens 2 an einer Austrittsseite A der Steckkupplung verrastet angeordnet ist. Anstelle des hier dargestellten Kopfes 40 ist ebenfalls ein Kugelkopf, ein Linsenkopf oder eine ähnliche Verdickung als Kopf in Kombination mit einem Bolzen nutzbar.

Die Steckkupplung 1 weist eine hohizylindrische Ringstruktur 10 auf, die sich parallel zu einer axialen Längsachse L erstreckt. Die Ringstruktur ist bandartig aufgebaut und hat eine radiale Innenseite 12 und eine radiale Außenseite 14. Gemäß unterschiedlicher bevorzugter Ausführungsformen vorliegender Erfindung ist die Ringstruktur 10 umfänglich kontinuierlich durchlaufend oder mit regelmäßigen Durchbrüchen 16 ausgebildet.

Erfindungsgemäß wird die Ringstruktur 10 in der Bauteilöffnung O verrastet. Um die ringförmige Steckkupplung 1 in der Bauteilöffnung O zu verrasten, sind an der radialen Außenseite 14 radial abstehende Halteflächen 18 vorgesehen. Eine Mehrzahl dieser Halteflächen 18 ist umfänglich um die Ringstruktur 10 gleichmäßig verteilt angeordnet. Diese Halteflächen 18 bilden einen axialen Hinterschnitt in einer Einsetzrichtung R_{E}, sodass die ringförmige Steckkupplung 1 nur bis zu den Halteflächen 18 in die Bauteilöffnung O eingesetzt werden kann. Dazu ist erforderlich, dass sich die Halteflächen 18 über einen Durchmesser der Bauteilöffnung radial hinaus erstrecken.

Ebenfalls an der radialen Außenseite 14 ist eine Mehrzahl von Rastmitteln, vorzugsweise federnde Rasthaken 20, angeordnet. Die Rasthaken 20 weisen einen axialen Steg 22, einen verriegelnden axialen Hinterschnitt 24 und eine Einführschräge 26 auf. Der Hinterschnitt 24 ist quer zur Längsachse L der Steckkupplung 1 angeordnet und liegt damit gegenüber der Haltefläche 18. Somit bildet der Hinterschnitt 24 des Rasthakens 20 einen axialen Hinterschnitt entgegen der Einsetzrichtung R_{E} der Steckkupplung 1. Um die Steckkupplung 1 in die Bauteilöffnung O einsetzen zu können, sind die Rasthaken 20 über die axialen Stege 22 radial einwärts federnd konstruiert. Wird somit die Steckkupplung 1 in die Bauteilöffnung O gesteckt, federn die Rasthaken 20 zunächst radial einwärts, um sich dann am Rand der Bauteilöffnung O zu verriegeln. Danach sind die Halteflächen 18 und der axiale Hinterschnitt 24 an einander gegenüberliegenden Oberflächen des ersten Bauteils B1 angeordnet und verhindern ein ungewolltes Lösen der Steckkupplung 1 aus der Bauteilöffnung O.

Von der radialen Innenseite 12 der hohlzylindrischen Ringstruktur 10 erstreckt sich radial einwärts eine Mehrzahl von bandartigen Federarmen 30. Diese Federarme 30 bilden die zentral angeordnete Verraststruktur 28. Gemäß einer bevorzugten Ausführungsform vorliegender Erfindung sind die Federarme 30 bandartig ausgebildet, sodass sie eine Federarmbreite in Längsrichtung L und eine Federarmdicke quer dazu aufweisen. Die Federarmbreite ist größer als die Federarmdicke. In diesem Zusammenhang ist es bevorzugt, dass die Federarmbreite in Bezug auf die Längsrichtung L der Steckkupplung 1 geneigt oder parallel dazu oder zumindest in Teilbereichen geneigt und/oder parallel dazu angeordnet ist. Diese spezielle Anordnung der Federarme 30 unterstützt eine gezielte Einstellung des Federverhaltens der Federarme 30, um den Kupplungsbolzen 2 innerhalb der Steckkupplung 1 verlässlich zu verriegeln.

Weiterhin bevorzugt verlaufen die Federarme 30 in Abhängigkeit von einer zu erzielenden Haltekraft für den Kupplungsbolzen 2 geradlinig oder krummlinig radial einwärts. Bei einem geradlinigen Verlauf der Federarme 30 werden diese bevorzugt reversibel in ihrer radialen Längsrichtung gestaucht, um den Kupplungsbolzen 2 aufzunehmen. Bei einem krummlinigen oder bogenförmigen Verlauf, wie er beispielgebend in Fig. 2 gezeigt ist, weichen die Federarme 30 radial auswärts federnd aus, wenn der Kupplungsbolzen 2 in die Steckkupplung 1 eingesteckt wird. Mit zunehmender Länge der Federarme 30 nimmt dabei bevorzugt die Haltekraft der Federarme 30 ab, mit der sie am Kupplungsbolzen 2 angreifen. Die Haltekraft der Federarme 30 ist zudem bevorzugt über die Federarmdicke einstellbar. In diesem Zusammenhang nimmt die Haltekraft mit zunehmender Federarmdicke zu.

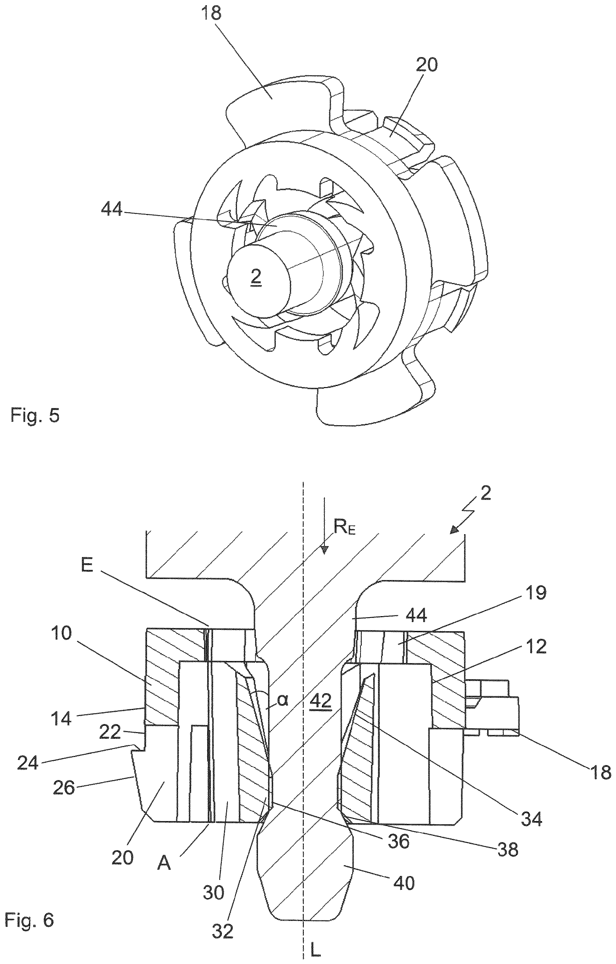

Die Federarme 30 laufen radial einwärts in einem freien Befestigungsende 22 aus. Aufgrund der freien Befestigungsenden 32 weichen diese bevorzugt beim Einsetzen des Kupplungsbolzens 2 beliebig aus. Nachdem der Kopf 40 des Kupplungsbolzens 2 die Befestigungsenden 30 passiert hat, versuchen die Befestigungsenden 32 in ihre Ausgangsposition zurückzukehren. Dabei kommen sie an einem Schaft 42 des Kupplungsbolzens 2 zur Anlage und klemmen diesen zwischen sich fest. Dies ist in der Schnittdarstellung gemäß Fig. 6 erkennbar.

Um ein Einsetzen des Kupplungsbolzens 2 in der Steckkupplung 1 zu erleichtern, weisen die Befestigungsenden 32 vorzugsweise eine Einführschräge 34 auf (siehe Fig. 6). Die Einführschräge 34 ist in einem Winkel α zur Längsachse L der Steckkupplung 1 angeordnet. Dieser Winkel α hat eine Größe aus dem Bereich von 5° ≤ α ≤ 45°, bevorzugt 10° ≤ α ≤ 30°.

Die Einführschräge 34 geht bevorzugt kontinuierlich über in eine Haltefläche 36, die wiederum bevorzugt mit einer Auszugsschräge 38 verbunden ist. Die Haltefläche 36 ist eben oder profiliert und/oder mit einer gewissen Oberflächenrauheit ausgestattet. Diese bevorzugten Ausgestaltungen gewährleisten einen verlässlichen Halt zwischen den Befestigungsenden 32 und dem Schaft 42 des Kupplungsbolzens 2. Sofern der Schaft 42 und die angreifenden Halteflächen 36 komplementär oder zumindest passend zueinander geformt sind, würden die Befestigungsenden 32 neben einem reibschlüssigen Halt auch einen formschlüssigen Halt am Kupplungsbolzen 2 bereitstellen.

Wie man anhand der Schnittdarstellungen in den Fig. 6, 9 und 10 erkennen kann, ist der Kupplungsbolzen 2 unterschiedlich ausgebildet. Gemäß der ersten Ausgestaltung in Fig. 6 weist der Kupplungsbolzen 2 einen zylindrischen Schaftbereich 44 auf, der bevorzugt etwa den gleichen Durchmesser wie der Kopf 40 aufweist. Die Steckkupplung 1 besitzt an der axialen Eintrittsseite E bevorzugt einen zylindrischen Aufnahmebereich 19, in den der zylindrische Schaftbereich 44 eingreift. Um nach hergestellter Verbindung zwischen der Steckkupplung 1 und dem Kupplungsbolzen 2 einen gewissen radialen Toleranzausgleich zu ermöglichen, ist der zylindrische Schaftbereich 44 im Durchmesser kleiner als der Innendurchmesser des zylindrischen Aufnahmebereichs 19 ausgestaltet. Während die Federarme 20 einer radialen Belastung der Bauteile B1, B2 nachgeben, kann der zylindrische Schaftbereich 44 im zylindrischen Aufnahmebereich 19 den Bewegungen der Bauteile B1, B2 folgen. Auf diese Weise stellt die Verbindung gemäß Fig. 6 ein Loslager zwischen den Bauteilen B1 und B2 dar, weil gewisse Toleranzbewegungen ermöglicht werden.

Gemäß einer weiteren bevorzugten Ausführungsform vorliegender Erfindung ist der zylindrische Schaftbereich 44' in seiner Größe an die zylindrische Aufnahmeöffnung 19 derart angepasst, dass der zylindrische Schaftbereich 44' ohne die Möglichkeit radialer Toleranzbewegungen relativ zur Steckkupplung 1 in der zylindrischen Aufnahmeöffnung 19 gehalten wird. In diesem Zusammenhang ist es bevorzugt, den Durchmesser des zylindrischen Schaftbereichs 44' an den Durchmesser der zylindrischen Aufnahmeöffnung 19 anzupassen. Durch beide Konstruktionsalternativen werden Toleranzausgleichsbewegungen in radialer Richtung zwischen dem ersten B1 und dem zweiten Bauteil B2 verhindert, sodass die Verbindung aus Steckkupplung 1 und Kupplungsbolzen 2 ein Festlager darstellt.

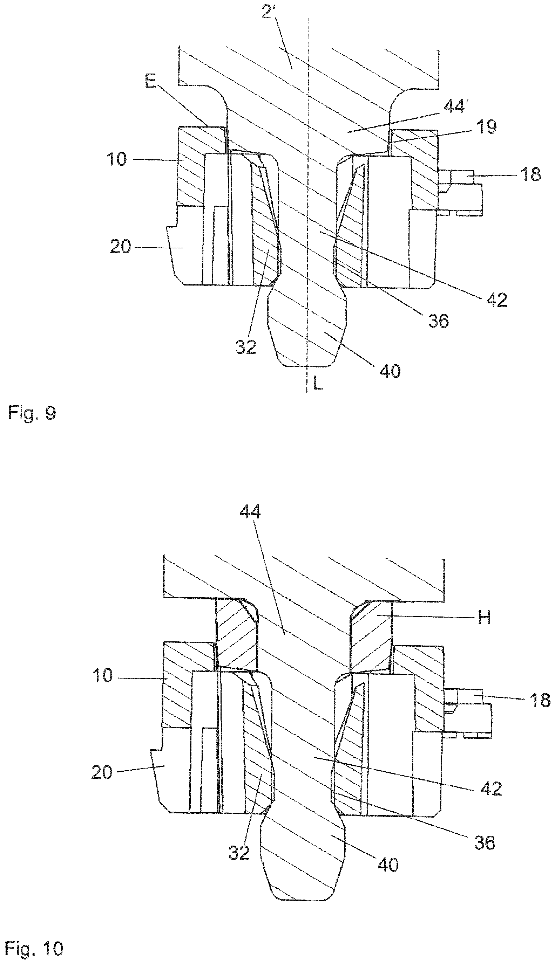

Alternativ zeigt Fig. 10 eine weitere bevorzugte Ausführungsform. Hier ist der universell einsetzbare Kupplungsbolzen 2 gemäß Fig. 6 mit einer Hülse H versehen, um bei gleichem Kupplungsbolzen 2 den zylindrischen Schaftbereich 44 flexibel an die zylindrische Aufnahme 19 jeder Größe anpassen zu können. Somit stellt die Anordnung gemäß Fig. 10 in gleicher Weise ein Festlager dar, wie die Anordnung gemäß Fig. 9. Entsprechend wirkt der zylindrische Schaftbereich 44' aus Fig. 9 in gleicher Weise wie die Hülse H als eine Radialfixierung für den Kupplungsbolzen 2 in der Steckkupplung 1.

Um die obige Verbindung herstellen zu können, bestehen die Steckkupplung 1 und der Kupplungsbolzen 2 bevorzugt aus Kunststoffen mit einer Festigkeit zwischen 20 und 100 MPa. Diese Kunststoffe können eine Glasfaserverstärkung und/oder andere Füllstoffe aufweisen. Bevorzugte Materialbeispiele sind POM (Polyoxymethylen), PA (Polyamid), PBT (Polybutylenterephtalat), PP (Polypropylen), ABS (Acrylmitril-Butadien-Styrol-Copolymerisat) und PTFE (Polytetrafluorethylen). Gemäß einer Ausführungsform bestehen Kupplung und Kupplungsbolzen aus einem integralen Kunststoffteil. Weiterhin bevorzugt ist die Steckkupplung 1 ein Hybridbauteil, in der die Federarme 30 und/oder die Ringstruktur durch Metalleinsätze verstärkt sind.

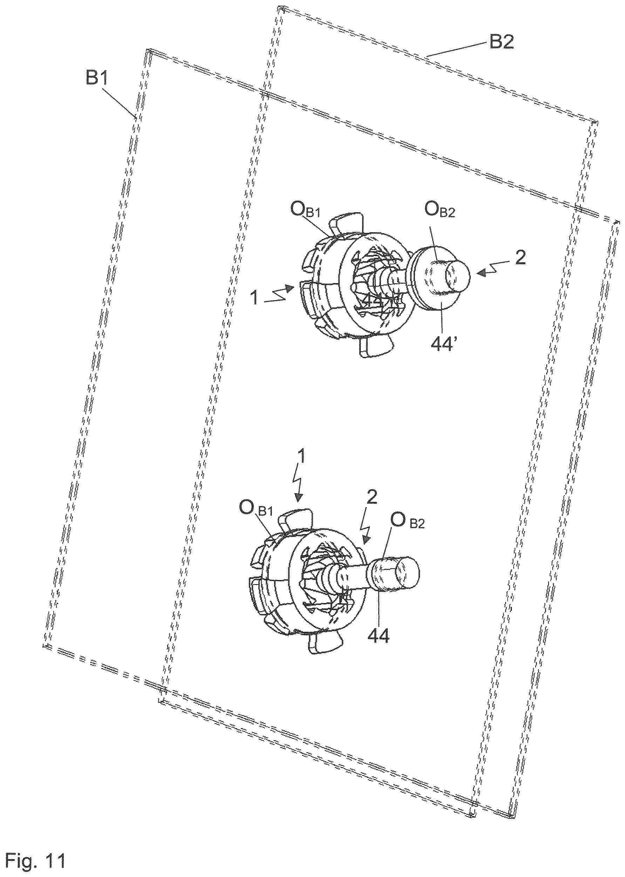

Gemäß einer bevorzugten Ausgestaltung wird eine Mehrpunkt-Schnappbefestigung (siehe Figur. 11), vorzugsweise eine Zwei- oder Dreipunkt-Schnappbefestigung, für eine Heckleuchte an der Außenkarosse eines Kraftfahrzeugs verwendet. Diese Befestigung ist analog auch für beliebig andere Anbauteile, wie Verkleidungen, Peripheriegeräte, Ausstattungszubehör usw. im Fahrzeug, allgemein in der Automobilindustrie, in der Bauindustrie und im Fahrzeugbau einsetzbar. Dabei werden ein oder zwei Kupplungsbolzen 2 in Kombination mit einer Steckkupplung 1 als Loslager verwendet, wie sie in Fig. 6 gezeigt sind. Eine weitere Kombination nutzt die Steckkupplung 1 in Verbindung mit einem Kupplungsbolzen 2, wie es in die Figuren 9 bis 10 dargestellt und diesbezüglich erläutert ist. Eine Kombination gemäß Fig. 9 oder 10 dient als Festlager. Das Festlager nimmt zunächst die Querkräfte auf die Verbindung der zwei Bauteile B1, B2 auf. Zudem stellt das Festlager bevorzugt den maßlichen Fixpunkt der Anordnung in der Außenkarosse dar, um die genau definierte Position der beiden Bauteile B1, B2 zueinander zu gewährleisten. Auf diese Weise werden bevorzugt Spaltmaße bei Anbauteilen an Kraftfahrzeugen eingehalten. Die Schnappverbindungen werden nahezu gleichzeitig hergestellt. Dabei sichert das Festlager die Positionstreue des Anbauteils, während die Loslager trotz vorhandener Ausrichtungsungenauigkeiten oder Toleranzen zwischen den Bauteilen B1 und B2 eine verlässliche zusätzliche Schnappverbindung zum Festlager realisieren.

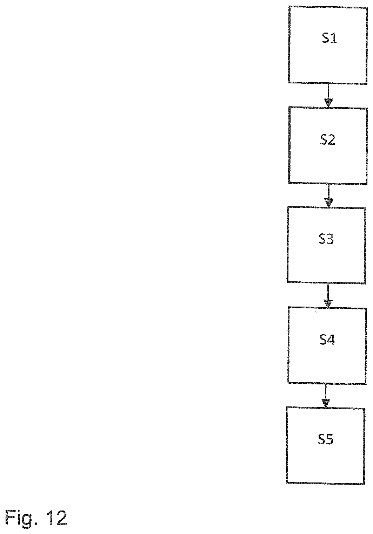

Das Verbindungsverfahren für die beiden Bauteile B1, B2 lässt sich folgendermaßen zusammenfassen. Im Schritt S1 (siehe Fig. 12) wird zumindest eine erste und eine zweite Steckkupplung 1 gemäß einer der oben beschriebenen bevorzugten Ausführungsformen in jeweils einer Bauteilöffnung O des ersten Bauteils angeordnet. Danach erfolgt ein Befestigen eines ersten und eines zweiten Kupplungsbolzens im zweiten Bauteil in einer Anordnung angepasst an die Anordnung der ersten und zweiten Steckkupplung im ersten Bauteil, wobei einer der Kupplungsbolzen die zylindrische Verdickung als Radialfixierung in Kombination mit der Steckkupplung aufweist und der andere Kupplungsbolzen ohne zylindrische Verdickung bereitgestellt wird (Schritt S2). Nun wird im Schritt S3 der Kupplungsbolzen in der ersten und zweiten Steckkupplung eingesteckt und dann verriegelt (Schritt S4). Zur Vorbereitung des Verbindens ist es erforderlich, den Kupplungsbolzen mit zylindrischer Verdickung als einen integralen Kupplungsbolzen oder als Kupplungsbolzen mit einer Hülse bereitzustellen. Zudem ist es bevorzugt, den Kupplungsbolzen mit Verdickung in die zylindrische Ringstruktur derart einzustecken (S5), dass die zylindrische Verdickung in der zylindrischen Aufnahme angrenzend an die Eintrittsseite der Ringstruktur angeordnet ist, sodass die zylindrische Aufnahme einen radialen Versatz der aufgenommenen zylindrischen Verdickung verhindert.

### Bezugszeichenliste

- 1: Steckkupplung
- 2: Kupplungsbolzen
- 10: hohlzylindrische Ringstruktur
- 12: radiale Innenseite
- 14: radiale Außenseite
- 16: Durchbruch
- 18: Haltefläche als axialer Hinterschnitt
- 19: zylindrischer Aufnahmebereich
- 20: Rasthaken
- 22: axialer Steg
- 24: axialer Hinterschnitt
- 26: Einführschräge
- 28: Verraststruktur
- 30: bandartiger Federarm
- 32: Befestigungsende
- 34: Einführschräge
- 36: Haltefläche
- 38: Auszugsschräge
- 40: Kopf
- 42: Schaft des Kupplungsbolzens
- 44, 44': zylindrischer Schaftbereich
- B1,B2: Bauteile
- O: Bauteilöffnung
- E: Eintrittsseite
- A: Austrittsseite
- L: Längsachse
- R_{E}: Einsetzrichtung
- H: Hülse

## Patentansprüche

1. Eine ringförmige Steckkupplung (1), die in einer Bauteilöffnung (O) eines ersten Bauteils (B1) befestigbar ist und die folgenden Merkmale aufweist:
a. eine hohlzylindrische Ringstruktur (10) mit einer Längsachse (L) sowie einer radialen Innen- (12) und einer radialen Außenseite (14),
b. eine Befestigungsstruktur (20) angeordnet an der radialen Außenseite (14) der Ringstruktur (10), mit der die Ringstruktur (10) in der Bauteilöffnung (O) befestigbar ist,
c. eine zentral im Inneren der Ringstruktur (10) angeordnete Verraststruktur (28),
c1. mit der ein Kupplungsbolzen eines zweiten Bauteils (B2) lösbar mit der Steckkupplung verbindbar ist und
c2. die aus mindestens drei bandartigen Federarmen bestehen, die sich von der radialen Innenseite der Ringstruktur krummlinig radial einwärts erstrecken und jeweils in einem freien Befestigungsende enden, sowie deren Federarmbreite in Längsrichtung der Ringstruktur angeordnet und größer als eine Federarmdicke ist, wobei die Befestigungsenden zumindest eine Einführschräge und einen Klemmbereich aufweisen, und
d. deren Ringstruktur (10) einen ersten (24) und einen zweiten gegeneinander in Längsrichtung (L) der Ringstruktur (10) wirkenden Hinterschnitt (18) aufweist, von denen zumindest der erste Hinterschnitt (24) in radialer Richtung federnd bewegbar ist, um die Ringstruktur (10) in der Bauteilöffnung (O) zu verrasten.

2. Steckkupplung (1) gemäß Anspruch 1, in der die Federarmbreite in Bezug auf die Längsrichtung der Steckkupplung geneigt oder parallel oder zumindest in Teilbereichen geneigt und/oder parallel dazu angeordnet ist.

3. Steckkupplung (1) gemäß einem der vorhergehenden Ansprüche, in der die zylindrische Ringstruktur eine axiale Eintrittsseite und eine axiale Austrittsseite für den zu befestigenden Kupplungsbolzen aufweist und die Federarme in Längsrichtung der Ringstruktur beabstandet zur Eintrittsseite der Ringstruktur an der radialen Innenseite der Ringstruktur befestigt sind, sodass eine zylindrische Aufnahme für eine Radialfixierung des Kupplungsbolzens in der Ringstruktur vorliegt.

4. Steckkupplung (1) gemäß einem der vorhergehenden Ansprüche, deren Einführschräge mit der Längsachse der Steckkupplung einen Winkel < 45 ° einschließt und die eine Auszugsschräge aufweist, die einen größeren Winkel mit der Längsachse einschließt als die Einführschräge.

5. Steckkupplung (1) gemäß einem der vorhergehenden Ansprüche, deren Klemmbereich eine Haltefläche parallel zur Längsachse der Steckkupplung aufweist.

6. Steckkupplung (1) gemäß einem der vorhergehenden Ansprüche, die als integrales Kunststoffteil vorgesehen ist, dessen Kunststoff eine Festigkeit im Bereich von 20 bis 100 MPa aufweist.

7. Eine Verbindung zwischen einem ersten Bauteil und einem zweiten Bauteil, in der das erste Bauteil eine Bauteilöffnung aufweist, in der eine Steckkupplung (1) gemäß einem der vorhergehenden Ansprüche befestigt ist, und in der am zweiten Bauteil ein Kupplungsbolzen befestigt ist, der in der Stecckupplung des ersten Bauteils gehalten ist.

8. Verbindung gemäß Anspruch 7, in der der Kupplungsbolzen einen länglichen Schaft und einen bauchigen Kopf aufweist.

9. Verbindung gemäß Anspruch 8, in der der Kupplungsbolzen in einem kopfabgewandten Schaftbereich eine zylindrische Verdickung aufweist, die an die zylindrische Aufnahme angepasst und in dieser aufnehmbar ist.

10. Verbindung gemäß Anspruch 9, in der die zylindrische Verdickung integral mit dem Kupplungsbolzen oder als auf dem Kupplungsbolzen befestigbare Hülse ausgebildet ist.

11. Eine Verbindung zwischen einem ersten und einen zweiten Bauteil, insbesondere eine Fahrzeugkarosserie und ein Anbauteil eines Fahrzeugs, in der das erste Bauteil mindestens zwei jeweils in einer Bauteilöffnung angeordnete Steckkupplungen gemäß einem der Ansprüche 1 bis 6 und das zweite Bauteil zwei dazu passende Kupplungsbolzen aufweist, wobei ein Kupplungsbolzen eine zylindrische Verdickung im kopfabgewandten Schaftbereich hat, die in einer zylindrischen Aufnahme der Stecckupplung aufgenommen ist, um eine radial feste Verbindung zwischen dem ersten und zweiten Bauteil zu bilden.

12. Verbindung gemäß Anspruch 11, in der der zweite Kupplungsbolzen keine zylindrische Verdickung aufweist, um einen radialen Toleranzausgleich zwischen der zweiten Kupplung und dem zweiten Kupplungsbolzen zu gewährleisten.

13. Verbindungsverfahren für ein erstes und ein zweites Bauteil, das die folgenden Schritte aufweist:
a. Anordnen (S1) zumindest einer ersten und einer zweiten Steckkupplung gemäß einem der Ansprüche 1 bis 6 in jeweils einer Bauteilöffnung des ersten Bauteils.
b. Befestigen (S3) eines ersten und eines zweiten Kupplungsbolzens im zweiten Bauteil in einer Anordnung angepasst an die Anordnung der ersten und zweiten Steckkupplung im ersten Bauteil, wobei einer der Kupplungsbolzen eine zylindrische Verdickung als Radialfixierung in Kombination mit der Steckkupplung aufweist und der andere Kupplungsbolzen ohne zylindrische Verdickung bereitgestellt wird, und
c. Einstecken (S4) und Verriegeln (S6) der Kupplungsbolzen in der ersten und zweiten Steckkupplung.

14. Verbindungsverfahren gemäß Anspruch 13, mit dem weiteren Schritt:
Bereitstellen (S2) des Kupplungsbolzens mit zylindrischer Verdickung als ein integraler Kupplungsbolzen oder als Kupplungsbolzen mit einer Hülse.

15. Verbindungsverfahren gemäß Anspruch 13 oder 14, mit dem weiteren Schritt:
Einstecken (S5) des Kupplungsbolzens mit Verdickung in die zylindrische Ringstruktur derart, dass die zylindrische Verdickung in der zylindrischen Aufnahme angrenzend an die Eintrittsseite der Ringstruktur angeordnet ist, sodass die zylindrische Aufnahme einen radialen Versatz der aufgenommenen zylindrischen Verdickung verhindert.

## Claims

1. An annular plug-in coupling (1) which can be fastened in a component opening (O) of a first component (B1) and has the following features:
a. a hollow cylindrical ring structure (10) having a longitudinal axis (L) and a radial inner side (12) and a radial outer side (14),
b. a fastening structure (20) arranged on the radial outer side (14) of the ring structure (10), with which the ring structure (10) can be fastened in the component opening (O),
c. a latching structure (28) arranged centrally in the interior of the ring structure (10),
c1. with which a coupling pin of a second component (B2) can be releasably connected to the plug-in coupling, and
c2. which consist of at least three band-like spring arms which extend radially inwards in a curvilinear manner from the radial inner side of the ring structure and end respectively in a free fastening end, and the spring arm width of which is arranged in the longitudinal direction of the ring structure and is greater than a spring arm thickness, wherein the fastening ends comprise at least an insertion slope and a clamping portion and
d. the ring structure (10) of which has a first (24) and a second undercut (18) acting against one another in the longitudinal direction (L) of the ring structure (10), of which at least the first undercut (24) can be moved resiliently in the radial direction in order to latch the ring structure (10) in the component opening (O).

2. Plug-in coupling (1) according to claim 1, in which the spring arm width is arranged in an inclined or parallel manner with respect to the longitudinal direction of the plug-in coupling or is arranged in an inclined and/or parallel manner at least in sections.

3. Plug-in coupling (1) according to one of the preceding claims, in which the cylindrical ring structure comprises an axial entry side and an axial exit side for the coupling pin to be fastened, and the spring arms are fastened to the radial inner side of the ring structure in the longitudinal direction of the ring structure at a distance from the entry side of the ring structure, so that a cylindrical seat is provided for a radial fixation of the coupling pin in the ring structure.

4. Plug-in coupling (1) according to one of the preceding claims, the insertion slope of which encloses an angle < 45° with the longitudinal axis of the plug-in coupling and which has an extraction slope which encloses a larger angle with the longitudinal axis than the insertion slope.

5. Plug-in coupling (1) according to one of the preceding claims, the clamping portion of which comprises a retention face parallel to the longitudinal axis of the plug-in coupling.

6. Plug-in coupling (1) according to one of the preceding claims, which is provided as an integral plastic part, the plastic of which comprises a strength in the range from 20 to 100 MPa.

7. A connection between a first component and a second component, in which the first component comprises a component opening, in which a plug-in coupling (1) according to one of the preceding claims is fastened, and in which a coupling pin, which is retained in the plug-in coupling of the first component, is fastened to the second component.

8. Connection according to claim 7, in which the coupling pin has an elongated shaft and a bulbous head.

9. Connection according to claim 8, in which the coupling pin has a cylindrical thickening in a shaft portion facing away from the head, which is adapted to the cylindrical seat and can be received therein.

10. Connection according to claim 9, in which the cylindrical thickening is formed integrally with the coupling pin or as a sleeve which can be fastened to the coupling pin.

11. A connection between a first and a second component, in particular a vehicle body and an attachment component of a vehicle, in which the first component has at least two plug-in couplings according to one of the claims 1 to 6 each arranged in a component opening and the second component comprises two coupling pins fitting thereto, wherein one coupling pin comprises a cylindrical thickening in the shaft portion facing away from the head which is received in a cylindrical seat of the plug-in coupling in order to establish a radially fixed connection between the first and the second component.

12. Connection according to claim 11, in which the second coupling pin does not comprise a cylindrical thickening in order to ensure a radial tolerance compensation between the second coupling and the second coupling pin.

13. Connection method for a first and a second component, comprising the following steps:
a. arranging (S1) at least a first and a second plug-in coupling according to one of the claims 1 to 6 in a respective component opening of the first component,
b. fastening (S3) a first and a second coupling pin in the second component in an arrangement adapted to the arrangement of the first and the second plug-in coupling in the first component, wherein one of the coupling pins comprises a cylindrical thickening as a radial fixation in combination with the plug-in coupling and the other coupling pin is provided without a cylindrical thickening, and
c. inserting (S4) and locking (S6) the coupling pins in the first and the second plug-in coupling.

14. Connection method according to claim 13, with the further step:
providing (S2) the coupling pin with cylindrical thickening as an integral coupling pin or as coupling pin with a sleeve.

15. Connection method according to claim 13 or 14 with the further step:
inserting (S5) the coupling pin with thickening into the cylindrical ring structure such that the cylindrical thickening is arranged in the cylindrical seat adjacent to the entry side of the ring structure such that the cylindrical seat prevents a radial displacement of the received cylindrical thickening.

## Revendications

1. Raccord enfichable annulaire (1) apte à être fixé dans une ouverture de composant (0) d'un premier composant (B1) et présentant les caractéristiques suivantes :
a. une structure annulaire cylindrique creuse (10) avec un axe longitudinal (L) ainsi qu'un côté intérieur radial (12) et un côté extérieur radial (14),
b. une structure de fixation (20) disposée sur le côté extérieur radial (14) de la structure annulaire (10), avec laquelle la structure annulaire (10) peut être fixée dans l'ouverture de composant (O),
c. une structure d'encliquetage (28) disposée de façon centrale à l'intérieur de la structure annulaire (10),
c1. avec laquelle un boulon de raccordement d'un deuxième composant (B2) peut être relié de façon détachable au raccord enfichable, et
c2. laquelle est constituée d'au moins trois bras élastiques semblables à des bandes, lesquels s'étendent radialement vers l'intérieur de façon curviligne à partir du côté intérieur radial de la structure annulaire et se terminent respectivement par une extrémité de fixation libre, et dont la largeur de bras élastique est disposée dans la direction longitudinale de la structure annulaire et supérieure à une épaisseur de bras élastique, les extrémités de fixation présentant au moins un chanfrein d'introduction et une région de serrage, et
d. dont la structure annulaire (10) présente une première (24) et une deuxième contre-dépouille (18) agissant l'une contre l'autre dans la direction longitudinale (L) de la structure annulaire (10), parmi lesquelles au moins la première contre-dépouille (24) est déplaçable de façon élastique dans la direction radiale, pour encliqueter la structure annulaire (10) dans l'ouverture de composant (O).

2. Raccord enfichable (1) selon la revendication 1, dans lequel la largeur de bras élastique est inclinée par rapport à la direction longitudinale du raccord enfichable ou parallèle ou au moins partiellement inclinée et/ou parallèle à celle-ci.

3. Raccord enfichable (1) selon l'une des revendications précédentes, dans lequel la structure annulaire cylindrique présente un côté entrée axial et un côté sortie axial pour le boulon de raccordement à fixer, et les bras élastiques sont fixés au côté intérieur radial de la structure annulaire, à distance du côté entrée de la structure annulaire, dans la direction longitudinale de la structure annulaire, de manière à former un logement cylindrique pour une fixation radiale du boulon de raccordement dans la structure annulaire.

4. Raccord enfichable (1) selon l'une des revendications précédentes, dont le chanfrein d'introduction inclut un angle de < 45° avec l'axe longitudinal du raccord enfichable et présentant un chanfrein de retrait, lequel inclut un angle plus grand avec l'axe longitudinal que le chanfrein d'introduction.

5. Raccord enfichable (1) selon l'une des revendications précédentes, dont la région de serrage présente une surface de maintien parallèlement à l'axe longitudinal du raccord enfichable.

6. Raccord enfichable (1) selon l'une des revendications précédentes, lequel est conçu comme une pièce de plastique intégrale, dont la matière plastique présente une résistance comprise entre 20 et 100 MPa.

7. Assemblage entre un premier composant et un deuxième composant, dans lequel le premier composant présente une ouverture de composant dans laquelle est fixé un raccord enfichable (1) selon l'une des revendications précédentes, et dans lequel un boulon de raccordement maintenu dans le raccord enfichable du premier composant est fixé au deuxième composant.

8. Assemblage selon la revendication 7, dans lequel le boulon de raccordement présente une tige allongée et une tête bombée.

9. Assemblage selon la revendication 8, dans lequel le boulon de raccordement présente un épaississement cylindrique dans la région de tige opposée à la tête, lequel est adapté au logement cylindrique et peut être reçu dans celui-ci.

10. Assemblage selon la revendication 9, dans lequel l'épaississement cylindrique est formé intégralement avec le boulon de raccordement ou comme une douille apte à être fixée sur le boulon de raccordement.

11. Assemblage entre un premier et un deuxième composant, en particulier une carrosserie de véhicule et un accessoire d'un véhicule, dans lequel le premier composant présente au moins deux raccords enfichables respectivement disposés dans une ouverture de composant, selon l'une des revendications 1 à 6, et le deuxième composant présente deux boulons de raccordement correspondants, un boulon de raccordement comportant un épaississement cylindrique dans la région de tige opposée à la tête, lequel est reçu dans un logement cylindrique du raccord enfichable, pour former un assemblage fixe radial entre le premier et le deuxième composant.

12. Assemblage selon la revendication 11, dans lequel le deuxième boulon de raccordement ne présente pas d'épaississement cylindrique, afin de garantir une compensation de tolérance radiale entre le deuxième raccord et le deuxième boulon de raccordement.

13. Procédé d'assemblage pour un premier et un deuxième composant, présentant les étapes suivantes :
a. agencement (S1) d'au moins un premier et un deuxième raccord enfichable selon l'une des revendications 1 à 6 respectivement dans une ouverture de composant du premier composant,
b. fixation (S3) d'un premier et d'un deuxième boulon de raccordement dans le deuxième composant selon un agencement adapté à l'agencement du premier et du deuxième raccord enfichable dans le premier composant, l'un des boulons de raccordement présentant un épaississement cylindrique en tant que fixation radiale en combinaison avec le raccord enfichable et l'autre boulon de raccordement est dépourvu d'épaississement cylindrique, et
c. introduction (S4) et verrouillage (S6) des boulons de raccordement dans les premier et deuxième raccords enfichables.

14. Procédé d'assemblage selon la revendication 13, comprenant l'étape supplémentaire suivante :
- mise à disposition (S2) du boulon de raccordement avec l'épaississement cylindrique en tant que boulon de raccordement intégral ou que boulon de raccordement avec douille.

15. Procédé d'assemblage selon la revendication 13 ou 14, comprenant l'étape supplémentaire suivante :
- introduction (S5) du boulon de raccordement avec épaississement dans la structure annulaire cylindrique de manière à ce que l'épaississement cylindrique soit disposé dans le logement cylindrique à côté du côté entrée de la structure annulaire, de telle façon que le logement cylindrique empêche un décalage radial de l'épaississement cylindrique reçu.
